Europäisches Patentamt

European Patent Office

Office européen des brevets

(19)

(11) Publication number: **0 065 940**
**B1**

(12) **EUROPEAN PATENT SPECIFICATION**

(45) Date of publication of patent specification: **21.08.85**

(21) Application number: **82850114.8**

(22) Date of filing: **14.05.82**

(51) Int. Cl.⁴: **B 32 B 31/12,** B 32 B 21/08,
B 29 C 65/02

(54) **A process of surface-treating wood veneers or wood-veneer substitute materials, and apparatus for carrying out the process.**

(30) Priority: **15.05.81 SE 8103070**

(43) Date of publication of application:
**01.12.82 Bulletin 82/48**

(45) Publication of the grant of the patent:
**21.08.85 Bulletin 85/34**

(84) Designated Contracting States:
**AT BE CH DE FR GB IT LI LU NL SE**

(56) References cited:
FR-A-1 383 771
US-A-2 654 687
US-A-3 380 876

(73) Proprietor: **RYSSBY INDUSTRI AKTIEBOLAG**
**Box 128**
**S-340 16 Ryssby (SE)**

(72) Inventor: **Nilsson, Ake**
**Algvägen 6 B**
**5-302 70 Halmstad (SE)**
Inventor: **Karlsson, Paul**
**S-543 00 Tibro (SE)**
Inventor: **Stenqvist, Bo**
**Väktarevägen 16**
**S-302 56 Halmstad (SE)**

(74) Representative: **Fogelberg, Lennart**
**STENHAGEN PATENTBYRA AB Karlavägen 18**
**S-114 31 Stockholm (SE)**

Courier Press, Leamington Spa, England.

## Description

The present invention relates to a process of surface-treating wood veneers or substitutes therefor, and to apparatus for carrying out said process.

When using wood of a more expensive quality within the furniture and building industries, it is known to produce articles and profiled structures from a core of a less expensive material, such as wood of a cheaper quality or of a wood-fibre or wood-chip material, and to apply to the core a veneer of the more expensive kind of wood, or a substitute material herefor, instead of manufacturing said articles and profiled elements from solid wood of the said more expensive kind.

It is also known to treat the surface of wood by applying varnish, a glazing substance or paint to said surface, the procedural steps entailed herewith being time-consuming, costly and often harmful to the environment, since it is often necessary to repeat these procedural steps a number of times while rubbing down said surfaces in between, and since it is necessary to handle large quantities of solvent which must ultimately be taken care of.

Furthermore, US—A—2 654 687 discloses a process of surface treating of wall or building boards by forming decorative coatings thereon. According to this prior art process a film of polyester, attached by means of an intermediate resinous layer on a temporary supporting web, is coated on one side with a layer of a liquid adhesive, whereafter the multi-layer product is laminated to the boards by means of unheated pressure rolls and conveyor belts. The solvent of the liquid adhesive is not removed between the coating and laminating step but after the laminating step, so that the multi-layer components must be thoroughly selected in order to allow the penetration of the solvent. This reference states that difficulties will arise if it is attempted to apply a surface coating to boards in the form of an unsupported plastic sheet.

In accordance with the present invention there is now provided a process for surface-treating wood veneers, in which such procedural steps as varnishing, glazing, painting and sanding can be avoided, and which also can be used for surface-treating wood veneer substitute materials, preferably printed paper and which uses an unsupported plastic sheet.

In accordance with the invention there is also provided an apparatus with which wood veneers or substitute materials therefor can be surface treated in a ready and simple fashion.

The process according to the invention is characterized by coating one side of a film of polyester, polyvinyl chloride or a polyolefin with a thin layer of a liquid binder in dispersion or solution, whereafter the film is heated and air is blown onto the side of said film treated with said binder, to heat the binder and/or evaporate at least the major part of any binder dispersion agent or binder solvent present, whereafter the film is brought into contact with a wood veneer or substitute therefor, optionally mounted on a plate or a profiled element, and pressed against said wood veneer or substitute therefor by means of one or more heated rollers.

The technique of solvent drying on a coated film before it is laminated is known per se from FR—A—1 383 771, which reference, however, is concerned with quite another problem (diminuation of thermal decomposition of polyolefin coating) than the present invention.

The apparatus for carrying out the process according to the invention is characterized in that it includes means for coating one side of a film of a polyester, polyvinyl chloride or a polyolefin with a thin layer of a liquid binder; at least one heated drying cylinder, over which the film can pass with the binder-coated side thereof facing outwardly from said cylinder; a plurality of air nozzles extending transversely over the film on the coated side of the film; an endless conveyor belt having an upper part which extends over a fixedly mounted underplate, said conveyor belt being arranged to advance said wood veneer or substitute therefor, optionally arranged on a plate or a profiled element; and a heatable laminating press roll operating with said underplate to form therebetween a press nip for pressing the film against the veneer or substitute material with the binder-coated side of said film facing said veneer or substitute material.

According to a preferred embodiment of the invention, the means for coating one side of the film with a binder-containing layer comprises a pick-up roll for taking the liquid binder from a vessel; a transfer roll for transferring the binder from the pick-up roll to one side of the film, and a press roll abutting the other side of the film.

The transfer roll and the press roll are preferably capable of being raised and lowered individually.

The binder used may be a thermoplastic resin, for example a polyvinyl acetate, polyethylene-vinyl acetate, polyethylene, polyamide, a wax or mixture of these binders or may be a thermosetting resin. The binder is preferably applied in the form of a solution or dispersion, the air blown onto the side of the film coated with binder resulting in at least the major part of the solvent or dispersion agent being evaporated, and to initial hardening of the thermosetting binder, when such a binder is used. The binder, however, may also comprise a so-called hot melt, i.e. it is applied in molten form and thus completely lacks any other material in liquid phase. In this case, air is blown onto the binder-coated side of the film in order to keep the binder heated, which presumes that the air is heated.

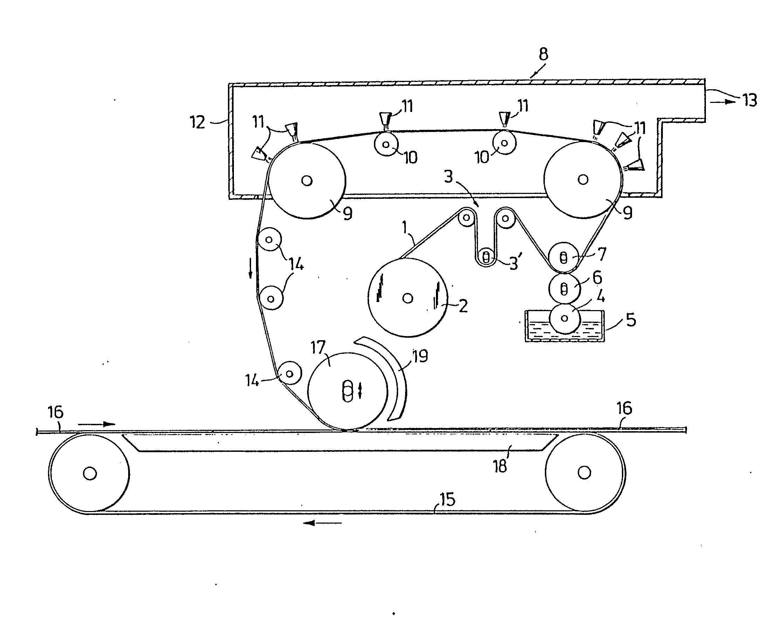

The invention will now be described in more detail with reference to the accompanying drawing, which illustrates schematically an embodiment of the apparatus according to the invention.

In the illustrated embodiment, a film 1 of a polyester, polyvinyl chloride or a polyolefin is fed from a store of such film in the form of a reel 2, and passed over a system of idler rollers 3 to means for coating one side of the film with a thin layer of a binder dispersion or binder solution, said binder being, for example, of the thermosetting kind. Of the rollers 3, one roller 3', is displaceable vertically, for regulating web tension. The apparatus includes a pick-up roller 4 for taking binder dispersion or binder solution from a vessel 5 containing said dispersion or solution, a transfer roller 6 for transferring binder dispersion or binder solution from the pick-up roller 4 to one side of the film 1, and press roll 7 arranged to abut the other side of the film 1. The film is passed from these means to a drying section 8, comprising two heated drying cylinders 9 and two support rollers 10, and a plurality of transverse nozzles (slit orifices) 11 through which air is blown onto the layer of binder, the film being fed over said cylinders and rollers with the binder-coated side of the film facing outwardly. The drying cylinders 9 and the nozzles 11 cause at least the major part of the binder dispersion agent or binder solvent to evaporate. The air contaminated with dispersion agent or solvent is collected by means of a hood 12 and passed away therefrom in the form of exhaust air 13.

The film 1 is passed from the drying section 8 over a plurality of guide rollers 14, down towards an endless conveyor belt 15 and a laminating press roll 17, said belt being arranged to convey a plurality of sheets or slabs 16 covered with a wood veneer. The upper part of the conveyor belt 15 passes over a fixedly mounted underplate 18, and the laminating press roll 17 is arranged to press the film 1 in a press nip against the veneer, with the binder-coated side thereof facing said veneer with the underplate 18 acting as a support.

The vessel 5 is suitably provided with an automatic level regulator and viscosity control.

As will be seen from the Figure, the transfer roller 6 and the press roll 7 are individually raiseable and lowerable, as is also the laminating press roll 17.

The pick-up roll 4 is preferably clad with rubber, while the transfer roller 6 is made of steel and the press means 7 made of rubber. The laminating press roll 17 is preferably clad with silicon rubber, as is also the conveyor belt 15.

The drying cylinders 9 are heated, preferably to a temperature of 20—150°C. The laminating press roll 17 is also heated, preferably to a temperature of 20—300°C, heating of the press roll being illustrated in the Figure by a radiating element 19.

It will be understood, that instead of the illustrated wood-veneer covered sheets 16, sheets covered with a wood-veneer substitute material can be covered with a plastics film in a corresponding manner. Further, the illustrated apparatus can be used for applying the plastic film onto a wood veneer or substitute material therefor without the veneer or substitute material being on a plate.

In a slightly modified apparatus, plastic film can also be laminated onto a wood veneer or substitute material arranged on a profiled element, there being used, for example, a corresponding profiled laminating press roll or a plurality of laminating press rolls exhibiting different angles relative to the horizontal, depending upon the different surfaces of the profile.

Further, the illustrated apparatus can be modified for using a binder of the hot melt type, in which case the vessel 5 is provided with a heating means arranged to maintain the binder therein in a molten state, and in addition hot air can be blown through the nozzles 11 to keep the binder hot.

**Claims**

1. A process of surface treating wood veneer or substitute material therefor, characterized in that a film of a polyester, polyvinyl chloride or a polyolefin is coated on one side thereof with a thin layer of a liquid binder, whereafter the film is heated and air is blown onto the binder-coated side thereof to heat said binder and/or evaporate at least the major part of any binder-dispersion agent or binder-solvent present, whereafter the film is brought into contact with a wood veneer or substitute material therefor, optionally supported on a plate or a profiled element, and pressed against said veneer or substitute material by means of one or more heated rollers.

2. An apparatus for carrying out the process according to claim 1, characterized in that said apparatus includes means (4—7) for coating one side of a film (1) of a polyester, polyvinyl chloride or a polyolefin with a thin layer of a liquid binder; at least one heated drying cylinder (9), over which the film (1) can pass with the side thereof coated with said binder facing outwardly from said cylinder (9); a plurality of air nozzles (11) which extend transversely over the film on the coated side of the film; an endless conveyor belt (15) having an upper part which extends over a fixedly mounted underplate (18), said conveyor belt being arranged to advance the wood veneer or substitute therefor, optionally arranged on a plate (16) or a profiled element; and a heatable laminating press roll (17) operating with said underplate (18) to form therebetween a press nip for pressing the film (1) against the veneer or substitute material with the binder-coated side of said film facing said veneer or substitute material.

3. An apparatus according to Claim 2, characterized in that the means (4—7) for coating one side of the film (1) with a binder-containing layer comprises a pick-up roll (4) for taking the liquid binder from a vessel (5); a transfer roller (6) for transferring the binder from the pick-up roll (4) to one side of the film (1); and a press roll (7) abutting the other side of the film (1).

4. An apparatus according to Claim 3, characterized in that the transfer roll (6) and the press roll (7) are each capable of being raised and lowered individually.

5. An apparatus according to Claim 3, characterized in that the pick-up roll (6) is clad with rubber.

6. An apparatus according to Claim 3, characterized in that the press roll (7) is made of rubber.

7. An apparatus according to Claim 2, characterized in that the laminating press roll (17) is clad with silicon rubber.

## Revendications

1. Procédé pour traiter la surface de contre-plaqué de bois ou ses matériaux de substitution, caractérisé en ce que l'on revêt une face d'un film de polyester, de chlorure de polyvinyle ou d'une polyoléfine à l'aide d'une mince couche d'un liant liquide, après quoi on chauffe le film et on souffle de l'air sur sa face revêtue du liant pour chauffer ledit liant et/ou évaporer au moins la majeure partie de tout agent de dispersion ou solvant du liant présent, après quoi on amène le film en contact avec un contre-plaqué de bois ou un de ses produits de substitution, éventuellement supporté sur une plaque ou sur un élément profilé, et on le presse contre ledit contre-plaqué ou son produit de substitution au moyen d'un ou de plusieurs rouleaux chauffés.

2. Appareil pour la mise en oeuvre du procédé selon la revendication 1, caractérisé en ce que ledit appareil comprend des moyens (4, 7) pour revêtir une face d'un film (1) de polyester, de chlorure de polyvinyle ou d'une polyoléfine à l'aide d'une mince couche d'un liant liquide; au moins un cylindre de séchage chauffé (9) sur lequel le film (1) peut passer, sa face revêtue du liant étant tournée vers l'extérieur par rapport au cylindre (9); un ensemble de buses d'air (11) qui s'étendent transversalement sur le film sur la face revêtue du film; une courroie transporteuse sans fin (15) possédant une partie supérieure qui s'étend au-dessus d'une plaque (18) montée fixe, ladite courroie transporteuse étant agencée pour faire avancer ledit contre-plaqué de bois ou son produit de substitution, éventuellement disposé sur une plaque (16) ou sur un élément profilé; et un cylindre de presse de stratification chauffable (17) opérant avec ladite plaque (18) pour former entre les deux une pince de presse pour presser le film (1) contre le contre-plaqué ou le matériau de substitution, la face revêtue de liant dudit film étant tournée vers le contre-plaqué ou le matériau de substitution.

3. Appareil selon la revendication 2, caractérisé en ce que les moyens (4, 7) pour revêtir une face du film (1) à l'aide d'une couche contenant un liant comprenant un cylindre barboteur (4) pour prendre le liant liquide à partir d'un récipient (5); un cylindre de transfert (6) pour transférer le liant du cylindre barboteur (4) vers une face du film (1); et un cylindre presseur (7) s'appuyant sur l'autre face du film (1).

4. Appareil selon la revendication 3, caractérisé en ce que le cylindre de transfert (6) et le cylindre presseur (7) sont chacun aptes à être levés et abaissés individuellement.

5. Appareil selon la revendication 3, caractérisé en ce que le cylindre barboteur (4) est garni de caoutchouc.

6. Appareil selon la revendication 3, caractérisé en ce que le cylindre presseur (7) est réalisé en caoutchouc.

7. Appareil selon la revendication 2, caractérisé en ce que le cylindre de presse de stratification (17) est garni de caoutchouc aux silicones.

## Patentansprüche

1. Verfahren zur Oberflächenbehandlung von Holzfurnier oder dessen Ersatz, dadurch gekennzeichnet, daß ein Polyester-, Polyvinylchlorid- oder Polyolefinfilm auf einer Seite mit einer dünnen Schicht eines Naßbinders überzogen wird, woraufhin der betreffende Film erwärmt und Luft auf die mit dem Binder überzogene Seite des betreffenden Films geblasen wird, um den Binder zu erwärmen und/oder zumindest den Hauptteil jeglichen Binder-Dispersionsmittels oder des vorhandenen Binder-Lösungsmittels zu verdampfen, woraufhin der Film in Kontakt gebracht wird mit einem Holzfurnier oder dessen Ersatz, welches bzw. welcher ggfs. auf einer Platte oder einem profilierten Element getragen wird, und daß der betreffende Film gegen das Furnier oder dessen Ersatz mittels einer oder mehrerer erwärmter Walzen gedrückt wird.

2. Vorrichtung zur Durch führung des Verfahrens nach Anspruch 1, dadurch gekennzeichnet, daß eine Einrichtung (4—7) zum Überziehen einer Seite eines Polyester-, Polyvinylchlorid- oder Polyolefin-Filmes (1) mit einer dünnen Schicht eines Naßbinders vorgesehen ist, daß zumindest ein erwärmter Trocknungszylinder (9) vorgesehen ist, über den der Film (1) derart hinweggelangen kann, daß die mit dem Binder überzogene Filmseite von dem betreffenden Zylinder (9) aus nach außen weist, daß eine Vielzahl von Luftdüsen (11) vorgesehen ist, die sich quer über den Film auf dessen überzogener Seite erstrecken, daß ein endloses Förderband (15) vorgesehen ist, welches einen oberen Teil aufweist, der sich über eine fest angeordnete Fußplatte (18) erstreckt, daß das Förderband so angeordnet ist, daß es das ggfs. auf einer Platte (16) oder einem profilierten Element angeordnete Holzfurnier oder dessen Ersatz fortbewegt, und daß eine erwärmbare Laminierungs-Druckwalze (17) vorgesehen ist, die mit der genannten Fußplatte (18) derart zusammenwirkt, daß zwischen der Walze und der Platte ein Druckspalt gebildet ist, in welchem der Film (1) gegen das Furnier oder dessen Ersatz mit der dem Furnier oder dessen Ersatz zugewandten, mit dem Binder überzogenen Filmseite gepreßt wird.

3. Vorrichtung nach Anspruch 2, dadurch gekennzeichnet, daß die Einrichtung (4—7) zum Überziehen einer Seite des Films (1) mit einer einen Binder enthaltenden Schicht eine Aufnahmewalze (4) zur Aufnahme des Naßninders aus einem Behälter (5), eine Übertragungswalze (6) zur Übertragung des Bindemittels von der Aufnahmewalze (4) auf eine Seite des Films (1) und eine Druckwalze (7) umfaßt, welche an der anderen Seite des Films (1) anliegt.

4. Vorrichtung nach Anspruch 3, dadurch gekennzeichnet, daß die Übertragungswalze (6) und die Druckwalze (7) jeweils individuell anhebbar und absenkbar sind.

5. Vorrichtung nach Anspruch 3, dadurch gekennzeichnet, daß die Aufnahmewalze (6) mit Gummi umkleidet ist.

6. Vorrichtung nach Anspruch 3, dadurch gekennzeichnet, daß die Druckwalze (7) aus Gummi besteht.

7. Vorrichtung nach Anspruch 2, dadurch gekennzeichnet, daß die Laminierungs-Druckwalze (17) mit Silikongummi umkleidet ist.

0 065 940